# EUROPEAN PATENT SPECIFICATION

(11) **EP 2 833 670 B1**
(45) Date of publication and mention of the grant of the patent: **02.03.2016**
(21) Application number: 13306097.0
(22) Date of filing: 29.07.2013
(51) Int. Cl.: H04W 36/00, H04W 36/04

(54) **Apparatuses, methods and computer programs for macro and small cell base station transceivers and mobile transceivers to provide handover information**
Vorrichtungen, Verfahren und Computerprogramme für makro- und kleinzellige Basisstations-Sender-Empfänger und mobile Sender-Empfänger zur Bereitstellung von Weiterleitungsinformationen
Appareils, procédés et programmes informatiques pour émetteurs-récepteurs de station de base de cellule petite et macro et émetteurs-récepteurs mobiles pour fournir des informations de transfert intercellulaire

(43) Date of publication of application: 04.02.2015
(73) Proprietor: ALCATEL LUCENT, 92100 Boulogne-Billancourt (FR)
(72) Inventor: Bakker, Hajo, 70435 Stuttgart (DE); Klein, Siegfried, 70435 Stuttgart (DE)
(74) Representative: Wetzel, Emmanuelle

(56) References cited:
- WO-A2-2012/070823
- US-A1- 2012 282 864
- US-A1- 2013 021 929
- US-A1- 2013 084 864
- US-A1- 2013 170 376

## Description

### Technical Field

Embodiments relate to apparatuses, methods and computer programs for macro and small cell base station transceivers and mobile transceivers to provide handover information, and more particularly, but not exclusively to management of signaling overhead for handover information in a wireless communication network.

### Background

This section introduces aspects that may be helpful in facilitating a better understanding of the inventions. Accordingly, the statements of this section are to be read in this light and are not to be understood as admissions about what is in the prior art or what is not in the prior art.

Cellular wireless communication systems are based on a plurality of cellular coverage areas, which are generated by interconnected base station transceivers. Mobile transceivers consume wireless services provided by a network and move through the cellular structure. Mobile transceivers carry out measurements on radio signals transmitted by the base station transceivers based on which the mobile transceivers are assigned to the cells of the network, handed over between the cells of the network, respectively. The size of a cell and the number of mobile transceivers which can be served may depend on the strength or quality of the respective radio signals. The capacity of each cell, in terms of data rate or number of mobile transceivers, which can be served, depends on system parameters and specifications, such as bandwidth, maximum or minimum data rates per mobile transceiver, etc. The traffic demand on the other side depends on the density of the mobile transceivers, e.g. in a downtown area the density of mobile transceivers may be higher than in a rural area. The traffic demand may also depend on other factors, such as business and rush hours, occurrence of events like mass events, characteristics of traffic demands, service mix, etc.

During changing traffic conditions it may be desirable for operators of cellular systems to control, rearrange, or shift capacity in their network, for example by changing coverage areas of certain cells in the network. One concept uses modification of handover measurements, e.g. manipulating handover margins or parameters to change the handover behavior of mobile transceivers, for example, to affect handovers to a neighbor cell earlier or later, together with according interference management strategies. This may provide control of cell sizes to a certain extent. For changing a handover configuration at a mobile transceiver according signaling messages and protocols may be provided by the according specification of a cellular system.

Document US 2013/0084864 A1 discloses systems and techniques for handover management in wireless communication networks. An apparatus, such as a base station, receives information relating to load conditions and computes handover threshold information based on the information relating to the load conditions. The information relating to the load conditions may comprise information received from other base stations, and the base station may in turn share its own information. Information may be shared through direct communication between base stations, or may be managed by a controller. Handover thresholds may be set for user devices based on the load metric information. Further, document US 2013/021929 A1 discloses a method for mobility management of a terminal, where transmission is being coordinated between the serving base station and a neighbouring base station, in a Cooperative Multi-Point, CoMP, operation. In particular, the starting time of CoMP operation is being indicated to the terminal.

### Summary of illustrative Embodiments

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

Various embodiments provide apparatuses, methods and computer programs base station transceivers, e.g. small cell or macro cell base station transceivers, and mobile transceivers to provide handover information. In particularly, an improved management of a signaling overhead for communication of handover information in a wireless communication network may be provided by embodiments. Embodiments may allow communicating information relating to multiple entities, e.g. base station transceivers or mobile transceivers, in a more efficient way. Embodiments may achieve a more efficient signaling by signaling handover information relating to multiple cells or base station transceivers in one message, for example, by waiting until information relating to multiple handover configurations are available at a base station transceiver, which are then communicated together to a mobile transceiver. Communicating multiple handover configurations together may save signaling overhead compared to communicating hand over configurations for each base station transceiver separately. Embodiments may also enable communicating information related to handover to multiple mobile transceivers together, for example, by using a broadcast channel, which is common to the multiple mobile transceivers. Communicating information related to handover to multiple mobile transceivers using a common channel may save signaling overhead compared to communicating the information related to handover to the multiple mobile transceivers using dedicated or individual channels, or messages, respectively. Embodiments provide an apparatus for a macro cell base station transceiver. The apparatus is operable to provide information related to handover between the macro cell base station transceiver and a small cell base station transceiver to a mobile transceiver. The macro cell base station transceiver comprises a coverage area, which at least partly surrounds a coverage area of the small cell base station transceiver. The macro cell apparatus comprises an interface operable to communicate with the small cell base station transceiver. The macro cell apparatus further comprises a transceiver module operable to communicate with the mobile transceiver. The macro cell apparatus comprises a control module operable to control the interface and the transceiver module. The control module is further operable to receive information related to a handover measurement from the small cell base station transceiver using the interface. The control module is operable to wait for a delay period and the control module is operable to provide the information related to the handover measurement to the mobile transceiver using the transceiver module after the delay period.

The delay period may allow embodiments to receive information related to handover measurements from multiple small cell base station transceivers. Embodiments may then provide information related to handover measurements of multiple small cell base station transceivers together and signaling overhead may be saved compared to providing information related to handover measurements of multiple small cell base station transceivers separately.

Embodiments further provide an apparatus for a small cell base station transceiver. The small cell base station transceiver comprises a coverage area, which is at least partly surrounded by a coverage area of a macro cell base station transceiver. The apparatus comprises an interface operable to communicate with the macro cell base station transceiver. The small cell apparatus further comprises a control module operable to control the interface. The control module is further operable to determine a time setting for information related to handover measurements for a mobile transceiver associated with the macro cell base station transceiver. The control apparatus is further operable to provide the information related to the time setting and the information related to handover measurements for the mobile transceiver to the macro cell base station transceiver.

In an embodiment the small cell apparatus may influence the time until handover measurement settings are applied at a mobile transceiver associated to a macro cell. By influencing the time setting the small cell may be enabled to control a number of handovers and may therewith reduce a signaling overhead for individual signaling of handover related information, e.g. for handover request messages.

Embodiments further provide an apparatus for a base station transceiver, such as a macro cell or a small cell base station transceiver. The base station transceiver apparatus is operable to provide information related to handover between the base station transceiver and another base station transceiver to two or more mobile transceivers. The base station transceiver apparatus comprises an interface operable to communicate with the other base station transceiver. The base station transceiver apparatus comprises a transceiver module operable to communicate with the two or more mobile transceivers. The base station transceiver apparatus comprises a control module operable to control the interface and the transceiver module. The control module is further operable to receive information related to a handover measurement from the other base station transceiver using the interface. The control module is further operable to provide the information related to the handover measurement to the two or more mobile transceivers using the transceiver module on a channel common to the two or more mobile transceivers.

Embodiments further provide an apparatus for a mobile transceiver. The mobile transceiver apparatus comprises a transceiver module operable to communicate with a base station transceiver. The mobile transceiver apparatus comprises a control module operable to control the transceiver module. The control module is further operable to receive information related to handover measurements on signals transmitted by one or more base station transceivers from the base station transceiver. The control module is operable to receive the information on a channel common to two or more mobile transceivers.

Using a channel common to two or more mobile transceivers for providing the information related to the handover measurement may save signaling overhead compared to using individual channels or messages.

Embodiments provide a method for a macro cell base station transceiver, which is operable to provide information related to handover between the macro cell base station transceiver and a small cell base station transceiver to a mobile transceiver. The macro cell base station transceiver comprises a coverage area, which at least partly surrounds a coverage area of the small cell base station transceiver. The method comprises receiving information related to a handover measurement from the small cell base station transceiver. The method further comprises waiting for a delay period and the method comprises providing the information related to the handover measurement to the mobile transceiver after the delay period.

Embodiments provide a method for a small cell base station transceiver. The small cell base station transceiver comprises a coverage area, which is at least partly surrounded by a coverage area of a macro cell base station transceiver. The method comprises determining a time setting for information related to handover measurements for a mobile transceiver associated with the macro cell base station transceiver. The method comprises providing the information related to the time setting and the information related to handover measurements for the mobile transceiver to the macro cell base station transceiver.

Embodiments provide a method for a base station transceiver operable to provide information related to handover between the base station transceiver and another base station transceiver to two or more mobile transceivers. The method comprises receiving information related to a handover measurement from the other base station transceiver. The method further comprises providing the information related to the handover measurement to the two or more mobile transceivers on a channel common to the two or more mobile transceivers.

Embodiments provide a method for a mobile transceiver. The method comprises receiving information related to handover measurements on signals transmitted by one or more base station transceivers from the base station transceiver on a channel common to two or more mobile transceivers.

Embodiments further provide a computer program having a program code for performing one or more of the above described methods, when the computer program is executed on a computer or processor. A further embodiment is a computer readable storage medium storing instructions which, when executed by a computer, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which
Fig. 1 illustrates embodiments of a macro cell base station transceiver apparatus and a small cell base station transceiver apparatus;
Fig. 2 illustrates embodiments of a base station transceiver apparatus and a mobile transceiver apparatus;
Fig. 3 illustrates an interference situation in an embodiment;
Fig. 4 illustrates another interference situation in an embodiment;
Fig. 5 shows a HetNet scenario with embodiments;
Fig. 6 illustrates a view chart of handover locations in an embodiment;
Fig. 7 illustrates another view chart of handover locations in an embodiment;
Fig. 8 illustrates another view chart of handover locations in an embodiment;
Fig. 9 illustrates another view chart of handover locations in an embodiment;
Fig. 10 illustrates another view chart of handover locations in an embodiment;
Fig. 11 illustrates a block diagram of a flow chart of an embodiment of a method for a macro cell base station transceiver;
Fig. 12 illustrates a block diagram of a flow chart of an embodiment of a method for a small cell base station transceiver;
Fig. 13 illustrates a block diagram of a flow chart of an embodiment of a method for a base station transceiver; and
Fig. 14 illustrates a block diagram of a flow chart of an embodiment of a method for a mobile transceiver.

### Description of Embodiments

Various example embodiments will now be described more fully with reference to the accompanying drawings in which some example embodiments are illustrated. In the figures, the thicknesses of lines, layers or regions may be exaggerated for clarity.

Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In mobile communication networks heterogeneous architectures may be used. Heterogeneous Networks (HetNets) are networks, which utilize cell types of different sizes, as, for example, macro cells and small cells, such as metro cells, micro or pico cells, and femto cells. Such cells are established by base station transceivers for which their coverage areas are determined by their transmission power and interference condition. Small cells are cells having a smaller coverage area than macro cells. In some network scenarios the small cells' coverage area can be surrounded by the coverage area of a macro cell. Small cells may be deployed to extend the capacity of a network.

In the 3^{rd} Generation Partnership Project (3GPP), HetNets have been added to the scope of the Long Term Evolution-Advanced (LTE-A) work item. Since the cells or base stations in such networks may utilize the same frequency resources, such architectures may suffer from interference created by the overlapping coverage areas of these cells. Therefore enhanced Inter-Cell Interference Coordination (eICIC) for co-channel HetNet deployment is one of the techniques for LTE Release 10 (Rel-10). Co-channel HetNets comprise macro cells and small cells operating on the same frequency channel. Such deployments present some specific interference scenarios for which eICIC techniques are utilized.

In one example scenario, the small cells are open to users of the macro cell. In order to ensure that such small cells carry a useful share of the total traffic load, User Equipment (UE) or mobile transceivers may be programmed or configured to associate preferentially with the small cells rather than the macro cells, for example, by biasing the Signal-to-Interference-and-Noise Ratio (SINR) or a Reference Signal Receive Power (RSRP) threshold at which they will select a small cell to associate with. Under such conditions, UEs near the edge of a small cell's coverage area may suffer strong interference from one or more macro cells. In order to alleviate such interference, some radio frames or sub-frames may be configured as "blank" or "almost blank" in a macro cell. A blank sub-frame may contain no transmission from the macro cell, while an "almost blank" sub-frame typically contains no payload data transmission and little or no control signaling transmission, but may contain reference signal transmissions in order to ensure backward compatibility with legacy terminals, which expect to find the reference signals for measurements but are unaware of the configuration of almost blank sub-frames.

Almost blank sub-frames may also contain synchronization signals, broadcast control information and/or paging signals. The utilization of "blank" or "almost blank" sub-frames enables reduced or even suppressed interference for the small cell within these sub-frames. Hence, "blank" or "almost blank" sub-frames may be regarded as radio frames or sub-frames during which at least some radio resources are suspended from transmission, i.e. the transmission power of a cell or base station transceiver may be reduced on these radio resources.

Moreover, for coverage expansion, mostly for coverage of a small cell surrounded by one or more macro cells, within HetNets a bias value has been defined. For example, based on the bias value a mobile transceiver or User Equipment (UE) may request a handover from a macro cell to a small cell earlier than from one macro cell to another macro cell.

Another example scenario can arise with HetNets in which one or more cells operate on a Closed Subscriber Group (CSG) basis, and are therefore typically not open to users of the cellular network. For example, such a scenario can occur when CSG femto cells are being installed to cover households, but only allow a number of registered mobile to associate, while other mobiles are blocked. In this case, the small cells can cause strong interference to the macro cell UEs when these macro cell UEs come close to or enter the coverage area of the small cell CSG base station transceivers, however, without having the possibility to associate with them, i.e. to be handed over to them. It may then be beneficial for the open cells to indicate to their UEs the sub-frames in which they should make resource specific measurements, i.e. the sub-frames in which interference from one or more CSG cells is reduced or absent. In the following, to a base station transceiver may also be referred to as NodeB (NB) or as eNodeB (eNB) according to the 3GPP terminology.

However, to make use of blank or Almost Blank Sub-frames (ABSs) effectively (note that the term "ABS" is used, and should be understood to include both blank and almost blank sub-frames), signaling may be utilized between the cells, e.g. across the corresponding backhaul interface, known in LTE as the "X2" interface. For LTE Rel-10, it has been agreed that this X2 signaling will take the form of a coordination bitmap to indicate the ABS pattern (for example with each bit corresponding to one sub-frame in a series of sub-frames, with the value of the bit indicating whether the sub-frame is an ABS or not). Such signaling may help the cell to schedule data transmissions in the small cell appropriately to avoid interference (e.g. by scheduling transmissions to UEs near the edge of the small cell during ABSs), and to signal to the UEs the sub-frames, which should have low macro cellular interference and should therefore be used for measurements. Examples for such measurements are measurements for Radio Resource Management (RRM), which typically relate to handover, measurements for Radio Link Monitoring (RLM), which typically relate to detection of serving radio link failure, and measurements for Channel State Information (CSI) or Channel Quality Information (CQI), which typically relate to link adaptation on the serving radio link. In a CSG scenario, the ABS frames of the CSG cell can be used for scheduling data transmissions from other cells with reduced interference from the CSG cell.

In such an example scenario, Radio Resource Control (RRC) signaling can be utilized to indicate to the UEs the set of sub-frames, which they should use for measurements (e.g., for RLM/RRM or CSI), where RRC is a signaling protocol standardized by 3GPP for control and configuration signaling. Within a HetNet scenario, i.e. a macro cell and a number of small/pico/metro cells within the footprint to the macro cell may optimize or control parameters for hand over and handover measurements, which may differ e.g. based on load variations during the timeframe of a day (e.g. peak hours).

The macro cell may define ABS. Based on the ABS setting the small cell may define a bias parameter, which may be part of a handover configuration and is applied by all UEs. Updates of ABS and bias parameters are signaled towards all UEs within the footprint of the macro cell, i.e. to all UEs associated to the macro and all UEs associated to the small cells within the footprint of the macro cell.

In the following embodiments of apparatuses, methods and computer programs will be described. The apparatuses, method, or computer programs may be adapted to or configured for a mobile communication system, which may, for example, correspond to one of the 3GPP-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and the base station transceiver can be located in or adjacent to a coverage area of another base station transceiver, e.g. a macro cell base station transceiver or a CSG base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, a remote radio head, a transmission point etc., which may be further subdivided in a remote unit and a central unit.

A mobile transceiver can be associated with the base station transceiver or cell. The term cell refers to a coverage area of radio services provided by a base station transceiver, e.g. a NodeB, an eNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. CSG and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

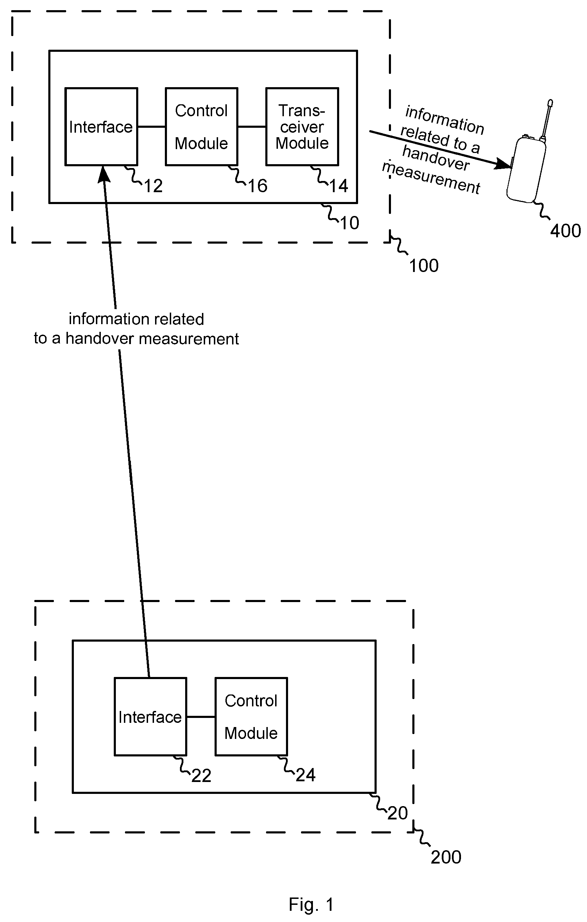

Fig. 1 illustrates an embodiment of an apparatus 10 for a macro cell base station transceiver 100. In other words, the apparatus may be adapted to or operable in a macro cell base station transceiver 100; it may be operated by or comprised in a macro cell base station transceiver 100. Embodiments may also provide a macro cell base station transceiver 100 comprising the apparatus 10. Fig. 1 further shows an embodiment (dashed lines) of a macro cell base station transceiver 100 comprising the apparatus 10. The apparatus 10 is operable to provide information related to handover between the macro cell base station transceiver 100 and a small cell base station transceiver 200 to a mobile transceiver 400. The macro cell base station transceiver 100 comprises a coverage area, which at least partly surrounds a coverage area of the small cell base station transceiver 200. The apparatus 10 comprises an interface 12 operable to communicate with the small cell base station transceiver 200. In some embodiments, an interface of an entity may correspond to any interface adapted to the respective communication or access technology. Interfaces may use the same or different access technologies, protocols, media, etc. As an example, in an embodiment of an LTE network the interface 12 may correspond to an X2-interface.

The apparatus 10 further comprises a transceiver module 14 operable to communicate with the mobile transceiver 400. In the following, a transceiver module may correspond to one or more transceiver devices, one or more transceiver units, or any means for transmitting or receiving. A transceiver module may therefore comprise typical transmitter or receiver components, such as one or more antennas, filter or filter circuitry, an amplifier such as a Low Noise Amplifier (LNA) or a Power Amplifier (PA), conversion circuitry for converting a Radio Frequency (RF) signal into a base band signal or vice versa, an analog/digital or digital/analog converter, or signal processing capability such as a Digital Signal Processor (DSP).

The apparatus 10 further comprises a control module 16, which is coupled to the control the interface 12 and the transceiver module 14 and which is operable to control the interface 12 and the transceiver module 14. A control module may correspond to one or more control units, one or more control devices, or any means for controlling. In some embodiments the control module 12 may be implemented in software, which is executable on accordingly adapted hardware, such as a processor, a Digital Signal Processor (DSP), a multi-purpose processor, or the like.

The control module 16 is operable to receive information related to a handover measurement from the small cell base station transceiver 200 using the interface 12. The control module 16 is further operable to wait for a delay period, and the control module is operable to provide the information related to the handover measurement to the mobile transceiver 400 using the transceiver module 14 after the delay period. It is to be understood that any information described herein may be represented by analog or digital data or signals. For example, information may be represented by one or more digital values, such as bits, based on a corresponding protocol, which may be specified as part on corresponding system specifications. In some embodiments the delay period may be predefined. In some embodiments the delay period may correspond to 30s, 1min, 2min, 5min, or 10min.

Fig. 1 further illustrates an embodiment of an apparatus 20 for a small cell base station transceiver 200. In other words, the apparatus may be adapted to or operable in a small cell base station transceiver 200; it may be operated by or comprised in a small cell base station transceiver 200. Embodiments may also provide a small cell base station transceiver 200 comprising the apparatus 20. Fig. 1 further shows an embodiment (dashed lines) of a small cell base station transceiver 200 comprising the apparatus 20. The small cell base station transceiver 200 comprises a coverage area, which is at least partly surrounded by a coverage area of a macro cell base station transceiver 100 in line with what is described above. The apparatus 20 comprises an interface 22 operable to communicate with the macro cell base station transceiver 100. The apparatus 20 further comprises a control module 24, which is coupled to the interface 22 and which is operable to control the interface 22. With respect to the interface 22 and the control module 24 implementations it is referred to the above respective description of such components.

The control module 24 is further operable to determine a time setting for information related to handover measurements for a mobile transceiver 400 associated with the macro cell base station transceiver 100. The control module 24 is further operable to provide the information related to the time setting and the information related to handover measurements for the mobile transceiver 400 to the macro cell base station transceiver 100.

The delay period at the macro base station transceiver apparatus 10 may allow for multiple small cell base station transceivers to report their handover related information, which may, subsequently, be transmitted together to the mobile transceiver 400 or UE 400. For example, in an LTE or LTE-A network a UE 400 may not be addressed individually by a Radio Resource Control (RRC) message for every handover measurement configuration of a small cell 200. The air interface may therefore not be floated with a huge amount of signaling messages. A peak of signaling messages may therefore be reduced.

For example, in an LTE network changes of ABS and bias may be transferred via the LTE X2 interfaces and they may immediately be communicated to the UEs, e.g. a peak of signaling traffic may be generated. Embodiments may avoid or reduce such peaks as the air interface capacity may not be used for data traffic while signaling messages are transmitted. Embodiments may reduce the signaling load on the air interface, by collecting - within the macro cell 100 - new bias values proposed by the e.g. N pico cells 200 for a limited time interval or delay period. Instead of sending N-times RRC messages with one new bias value to the UEs, only one RRC message with N new bias values may be transmitted to a UE after the time interval expires. In some embodiments a small cell might define the time interval, which is transferred via the X2 interface 22 to the macro cell 100 comprised in the information on the time setting. In other words, embodiments may reduce a number signaling messages and air interface resources may be used for user traffic. Embodiments may therefore provide a higher system performance and a limitation of UE's battery consumption as less signaling messages may be received and transmitted. Accordingly, the information related to handover may comprise information related to a bias value.

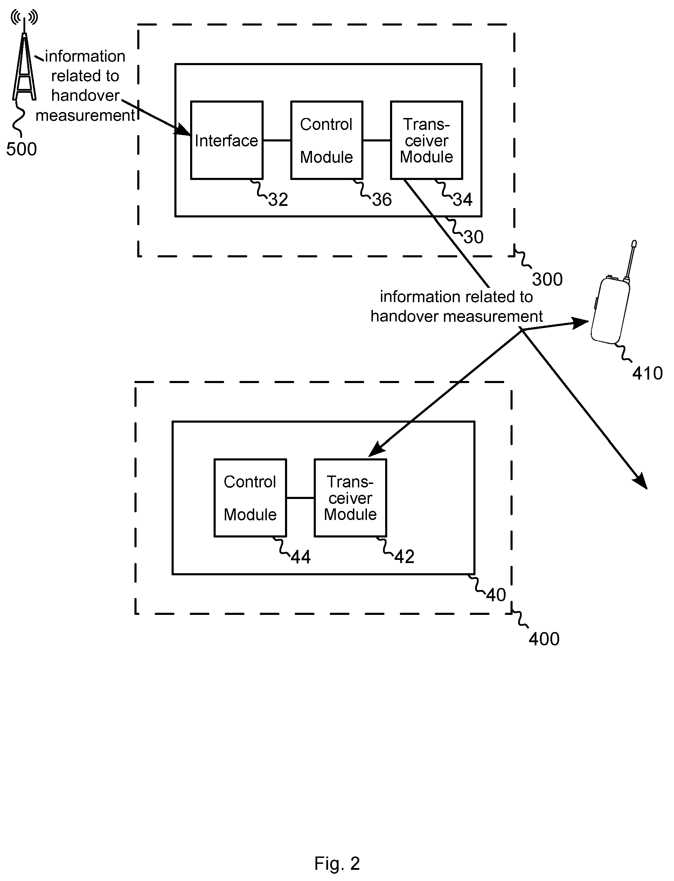

Fig. 2 illustrates an embodiment of an apparatus 30 for a base station transceiver 300. In other words, the apparatus may be adapted to or operable in a base station transceiver 300; it may be operated by or comprised in a base station transceiver 300. Embodiments may also provide a base station transceiver 300 comprising the apparatus 30.The base station transceiver 300 may correspond to a macro cell or a small cell base station transceiver 100 or 200 as illustrated in Fig. 1. Fig. 2 further shows an embodiment (dashed lines) of a base station transceiver 300 comprising the apparatus 30. The apparatus 30 is operable to provide information related to handover between the base station transceiver 300 and another base station transceiver 500 to two or more mobile transceivers 400, 410. The apparatus 30 comprises an interface 32 operable to communicate with the other base station transceiver 500. The apparatus 30 further comprises a transceiver module 34 operable to communicate with the two or more mobile transceivers 400, 410. The apparatus 30 further comprises a control module 36, which is coupled to the interface 32 and to the transceiver module 34, and which is operable to control the interface 32 and the transceiver module 34. The control module 36 is further operable to receive information related to a handover measurement from the other base station transceiver 500 using the interface 32. The control module 36 is further operable to provide the information related to the handover measurement to the two or more mobile transceivers 400, 410 using the transceiver module 34 on a channel common to the two or more mobile transceivers 400, 410. With respect to the interface 32, the transceiver module 34, and the control module 36 it is referred to the above description of such components.

As shown in Fig. 2 the information related to the handover measurement is provided to two UEs 400 and 410 using a common channel. Signaling overhead on the air-interface may be saved compared to individual signaling.

Fig. 2 further illustrates an embodiment of an apparatus 40 for a mobile transceiver 400, 410. In other words, the apparatus may be adapted to or operable in a mobile transceiver 400; it may be operated by or comprised in a mobile transceiver 400. Embodiments may also provide a mobile transceiver 400 comprising the apparatus 40.Fig. 2 further shows embodiments (one in dashed lines with details) of mobile transceivers 400, 410 comprising the apparatus 40. The apparatus 40 comprises a transceiver module 42 operable to communicate with the base station transceiver 300. The mobile transceiver apparatus further comprises a control module 44, which is coupled to the transceiver module 42, and which is operable to control the transceiver module 42. The control module 44 is further operable to receive information related to handover measurements on signals transmitted by one or more base station transceivers 300, 500 from the base station transceiver 300. The control module 44 is operable to receive the information on a channel common to two or more mobile transceivers 400, 410. With respect to the transceiver module 42 and the control module 44 it is referred to the above description of such components.

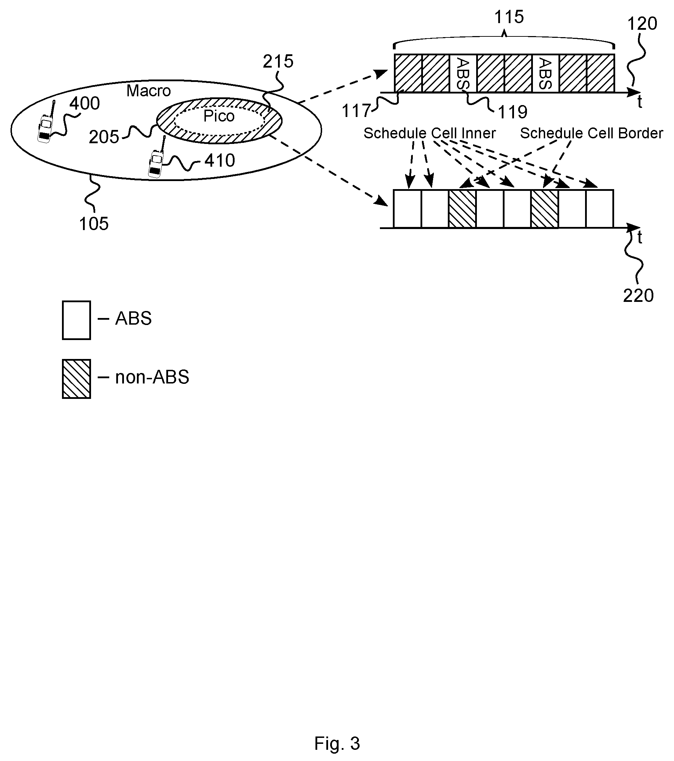

Fig. 3 illustrates an interference situation in an embodiment. In the following embodiment, the base station transceivers 100, 200, 300 are assumed to be eNBs of an LTE system. Mobile transceivers 400, 410 are accordingly adapted and they are associated to a macro cell 105 in Fig. 3. Furthermore, as it is shown in Fig. 3, it is assumed that base station transceiver 100 establishes a macro cell with a coverage area 105. The small cell base station transceiver 200 establishes small cell, e.g. a pico cell, with a coverage area 205. In the following the coverage area may represent their respective base station transceiver. Fig. 3 depicts a HetNet scenario with an embodiment of a macro cell base station transceiver 100 comprising the above described macro cell base station transceiver apparatus 10. The macro cell 105 surrounds the pico cell 205, for which the coverage 205 is shown with its cell border area 215. Moreover, Fig. 3 illustrates an ABS pattern or sequence 115 of the macro cell base station transceiver 100 on a time line 120, which is subdivided in radio frames. The sequence 115 comprises non-ABS 117 (hachured radio frames) and ABS 119 (blank radio frames), for each of which one is referenced in Fig. 3. Another time line 220 illustrates a scheduling sequence of the pico cell 205, which is also subdivided in corresponding radio frames. The two time lines 120 and 220 are in synchronization. There are radio frames, in which cell inner mobiles are scheduled (blank radio frames), and radio frames, in which cell border mobiles are scheduled (hachured radio frames). It is assumed that cell inner mobiles are located in the center part of the pico cell 205 and cell border mobiles are located in the cell border part 215 of the pico cell 205. As can be seen from the two time lines 120 and 220 the pico cell 205 schedules the inner cell mobiles during non-ABSs 117 and border cell mobiles during ABSs 119 of the macro cell 105.

In the scenario depicted in Fig. 3 eICIC is realized through ABSs, which are applied at the macro cell base station transceiver 100. During the macro ABS, the macro cell 105 suspends data transmission and transmits only pilots and broadcast signals. The pico cell 205 can schedule its cell border mobiles during ABS.

Coming back to the above described bias information, it is to be noted that higher bias values may expand the range for the pico cell 205, when using macro ABS. The number of ABSs may define the pico cell's border 215 capacity, e.g. the number of UEs that can be served or a maximum throughput in this area.

In embodiments the information related to handover may comprise information related to a bias value, which is to be applied to measurement results on radio signals of the small cell base station transceiver 200 at the mobile transceiver 400. The bias value is a parameter that can be used to control the handover of the UE 400 from the macro cell 105 to the small cell 205 and also from the small cell 205 to the macro cell 105. With a positive bias value(s) the UE 400 is handed over from the macro cell 105 to the pico cell 205 earlier than in a macro cell /macro cell scenario and later from a small cell 205 to a macro cell 105, again compared to a macro cell /macro cell scenario.

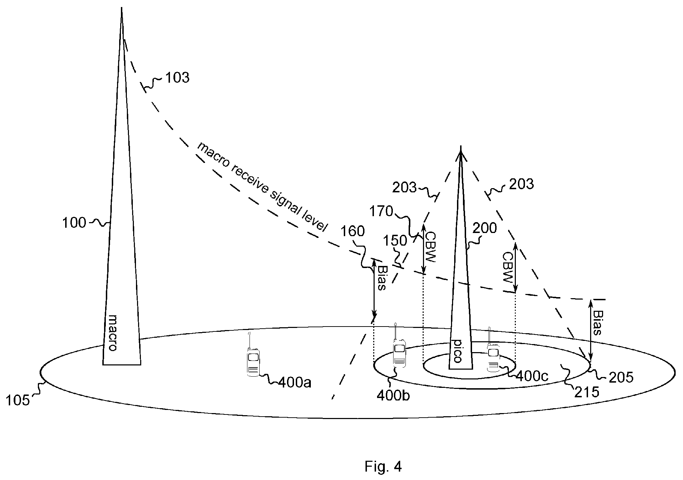

This is further illustrated in Fig. 4. Fig. 4 shows a macro cell base station transceiver 100 establishing the macro cell coverage area 105. Within the coverage area 105 of the macro cell base station transceiver 100 another base station transceiver 200 is located, which establishes a pico cell with coverage area 205, in line with Fig. 3. Fig. 4 also illustrates the cell border area 215 of the pico cell 205. Moreover, Fig. 4 shows a mobile transceiver 400 at three different positions 400a, 400b, and 400c. At position 400a the UE 100 is associated to the macro cell 100, it is also referred to as macro UE 400a. At position 400b the UE 400 is assumed to be associated with the pico cell 205 in the pico cells border area 215, to which it is also referred to as pico cell border mobile 400b. At position 400c the UE 400 is also associated to the pico cell 205 but it is located in the central area of the pico cell 205, hence it is also referred to as pico cell inner mobile 400c.

Fig. 4 illustrates receive levels 103 of the radio signals from the macro cell base station transceiver 100 at the different positions in the coverage area 105. It can be seen that the macro receive signal level 103 degrades the farther or the longer the distance to the macro cell base station transceiver 100. Accordingly the pico receive signal level 203 is shown in Fig. 4, which also degrades with the distance to the pico cell base station transceiver 200. Comparing the macro receive signal level 103 with the pico receive signal level 203 a break even position 150 can be located between the two base station transceivers 100, 200, at which the two receive signal levels 103, 203 are even. Conventionally a margin may be defined around this point at which unbiased handovers may be triggered. In the following the effect of biased handover will be described.

The bias value defines cell border of the pico cell 205 towards the macro cell 105. First, it is assumed that UE 400 moves from position 400a towards position 400b. The UE 400 receives information related to handover from the macro cell base station transceiver 100 including the bias information.

The bias value is applied to a parameter cell specific Offset (Ocn), which is part of an RRC measurement configuration message towards the UE. Values for the Ocn parameter are defined within the Q-Offset Range. For example, Ocn is the cell specific offset of the neighbor cell (e.g. "cellIndividuaIOffset" as defined within "measObjectEUTRA" corresponding to the frequency of the neighbor cell), and set to zero if not configured for the neighbor cell. "cellIndividuaIOffset" may be the cell individual offset applicable to a specific cell. Value dB-24 corresponds to -24 dB, dB-22 corresponds to -22 dB and so on.

An Information Element (IE) Q-OffsetRange may be used to indicate a cell or frequency specific offset to be applied when evaluating candidates for cell re-selection or when evaluating triggering conditions for measurement reporting. The value may be given in dB. Value dB-24 corresponds to -24 dB, dB-22 corresponds to -22 dB and so on.

The Q-Offset Information Element (IE) can also be defined in Abstract Syntax Notation 1 (ASN.1):
Q- OffsetRange information element
-- ASN1START
Q-OffsetRange ::= ENUMERATED {
dB-24, dB-22, dB-20, dB-18, dB-16, dB-14, dB-12, dB-10, dB-8, dB-6, dB-5, dB-4, dB-3, dB-2, dB-1, dB0, dB1, dB2, dB3, dB4, dB5, dB6, dB8, dB10, dB12, dB14, dB16, dB18, dB20, dB22, dB24}
-- ASN1STOP

Hence, the macro base station transceiver 100 configures the UE 400 at position 400a with a positive bias value to be applied to the signals received from the pico base station transceiver 200. As the UE 400 moves from position 400a towards position 400b it will measure the radio signals received from the pico base station transceiver 200 and add the bias value to the result. If a positive bias value is configured the biased received signal power of the pico cell 205 will match the macro receive signal level at position 160. If a negative bias value is configured the biased received signal power of the pico cell 205 will match the macro receive signal level at position 170.

The macro base station transceiver 100 generates the coverage area 105, which at least partly surrounds the coverage area 205 of the other pico base station transceiver 200. Fig. 4 also illustrates a Cell Border Window (CBW) separating cell border 215 from cell inner mobiles. The CBW can be added to the measurement result on the signals of the macro cell 205 of a pico UE, as indicated by Fig. 4. As can be seen the macro receive signal level 103 would then be increased by the CBW and compared to the pico receive signal level 203. When these values match the boundary between the central part and the border part 215 of the pico cell 205 can be detected. This boundary can, for example, be used to distinguish mobiles in the cell borer 215 being scheduled in ABSs of the macro cell 105 and mobiles in the cell inner part of the pico cell 205 being scheduled during non-ABSs of the macro cell 105. For example, UE RRC messages can be used to determine at which of the different locations a UE is at. E.g., an event A3 may indicate that neighbor cell (e.g. pico cell 205) becomes better than the serving cell (e.g. macro cell 105) by an offset (handover margin or CBW).

If the UE 400 moves the other way, i.e. from position 400c towards position 400a, it can be configured by the small cell 205. In this case, the measurement results on the macro receive signal level 103 can be biased. In this direction a negative bias value may be added to the macro cell signal level 103 to achieve the same effect, a positive value can be added to the pico cell signal level 203, respectively.

In some embodiments, for example, the macro cell base station transceiver 100 has the master functionality for defining the ABS ratio for all small/pico/metro cells 205 within the footprint of the macro cell 105. A small/pico/metro cell 205 may find an optimal or desired bias value to "catch", e.g. as many as possible, UEs 400, 410 from the macro cell 105 by increasing the bias value, e.g. it may offload traffic from the macro cell 105. The bias value may be one out of several handover configuration parameters, which may be part of the information related to handover. Based on a new bias value a UE 400 might request to the serving radio cell 105 a handover, which is carried out - compared to old value - earlier or later.

A large negative bias value, see Fig. 4, may lead to an expanded cell coverage of the small/pico/metro cell 205 as the UEs 40 in the direction from the macro 100 towards the pico 200 may carry out a handover earlier compared to the standard handover procedure. A UE 400 moving from the small/pico/metro cell 205 towards the macro cell 105 may carry out the handover later than the optimal radio conditions, also based on the bias value. To enable a symmetrical handover for both UE 400 moving directions, i.e. almost at the same position, the small/pico/metro eNB 200 communicates the selected bias value via the X2 interface 22 to the macro eNB 100.

The cell range expansion may strictly relate to the number of ABS frames provided by the macro cell 105 and the number of UEs within the expanded cell range, as these UEs, due to the high interference, may only be scheduled during ABS, cf. Fig. 3. A modification of the bias parameter may be signaled towards all UEs 400, 410 within the footprint of the macro cell 105, i.e. to all UEs 400, 410 associated to the macro cell 105 and all UEs associated to the small/pico/metro cell 205 within the footprint of the macro cell 105. Each UE may be addressed individually by a Radio Resource Control (RRC) message, i.e. the air interface may be floated with a huge amount of signaling messages.

For example, only the bias value is transferred with no indication how fast or with which strategy this new bias value has to be applied. This message is sent by an eNB-1 to neighboring eNB-2 to initiate adaptation of mobility parameters.

Direction: eNB-1 → eNB-2. From Technical Specification (TS) 36.423 Mobility Change Request:

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | reject |
| eNB1 Cell ID | M | | ECGI 9.2.14 | | YES | reject |
| eNB2 Cell ID | M | | ECGI 9.2.14 | | YES | reject |
| eNB1 Mobility Parameters | O | | Mobility Parameters Information 9.2.48 | Configuration change in eNB₁ cell | YES | ignore |
| eNB2 Proposed Mobility Parameters | M | | Mobility Parameters Information 9.2.48 | Proposed configuration change in eNB₂ cell | YES | reject |
| Cause | M | | 9.2.6 | | YES | Reject |

Embodiments may enable a concept to apply new bias values in such a way, that signaling messages are saved, e.g. a reduction of peaks of signaling load. Proposals of new bias values from many small/pico/metro cells 205 to the macro cell 105 may not immediately be transmitted to UEs 400, 410 within the macro cell 105, which waits for the above described delay period. After the delay period, e.g. after a time interval elapsed, one or more reconfiguration messages, which may include more than one new bias value, may be transmitted. For example, embodiments may extent an X2 message, so a pico or small cell 205 might control the concept by defining the dedicated time interval as part of the information related to the time setting.

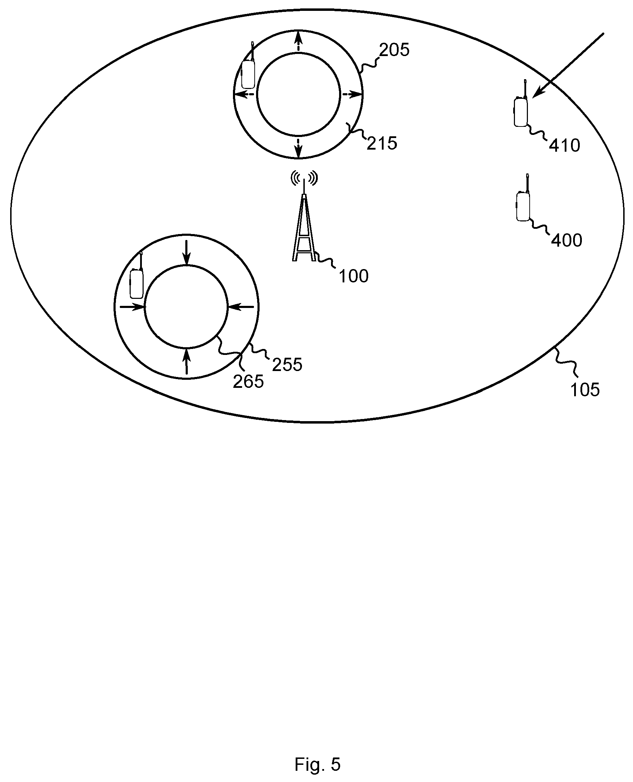

Fig. 5 shows a HetNet scenario with further embodiments. Fig. 5 depicts a macro cell 105 with two small/pico/metro cells 205, 255 within the footprint of the macro cell 105. The reference signs 205 and 255 shall also represent the according small cell base station transceivers. As an example, the macro cell 105 serves, for example, 400 UEs among which there are the two UEs 400 and 410 as shown in Fig. 5. UE 410 is assumed to have handed over from another macro cell, which is indicated by the arrow in Fig. 5. UE 400 is assumed to have been powered on in the macro cell 105. The first small/pico/metro 205 cell serves, for example, 50 UEs and the second small/pico/metro cell 255 serves, for example, e.g. 100 UEs in a hot spot. The macro cell base station transceiver 100 uses an ABS pattern.

In an embodiment, a small cell 205 may inform the macro cell 105 about larger bias values to configure or set at a macro UE 400, 410. In the example scenario depicted in Fig. 5 pico cell 205 may serve only a few UEs, for example, 50 UEs, which is assumed to conform to a low load. A Self Organizing Network (SON) algorithm at the pico cell 205 may decide, based on the available ABS frames and the load within the small/pico/metro cell 205, that a cell range expansion would be feasible to offload UEs from the macro 105 to the small/pico/metro cell 205. An increase of the bias for the small cell 205 configured at macro UEs may expand the coverage of the small cell 205. In other words, macro UEs may handover from the macro cell 205 to the small cell 105 based on an increased bias value for the small cell 205. Small cell 255 serves 100 UEs, which is assumed to conform to an overload situation. The small cell 255 may therefore decrease the bias value for small cell UEs with respect the small cell radio signal, so to achieve an offloading of UEs towards the macro cell 105, as UEs would than handover from the small cell 255 to the macro cell 105.

A decision at the small cell 205 to take over load from the macro cell 105 may result in a larger bias value, which may be communicated via the X2 interface, as interfaces 12 and 22 in Fig. 1, to the macro cell 105. In embodiments, the macro cell 105 may wait for the delay period instead of immediately reconfiguring all the macro UEs with individual RRC messages. The same may apply for pico/metro UEs in embodiments and, referring to the example embodiment, 450 reconnections within a short timeframe may be avoided. In some embodiments RRC messages may be bidirectional, e.g. the UEs may confirm a new configuration, and messages may also be transmitted within the Radio Link Control (RLC) acknowledge mode. Layer 1 (L1) Hybrid Automatic Retransmission reQuest (HARQ) retransmissions and Layer 2 (L2) RLC retransmissions might occur. Therefore, a huge amount of signaling traffic could potentially block the air interface capacity.

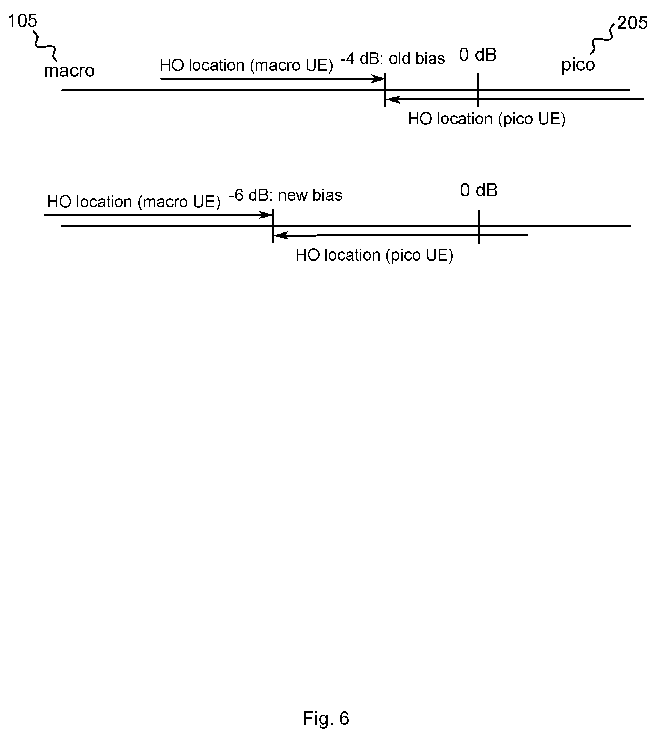

The following Figs. 6-10 depict diagrams illustrating handover locations between a macro cell 105 and a small cell 205 depending on a bias value. In these diagrams a 0dB marker indicates a location at which the signal levels or qualities of the macro cell 105 and the small cell 205 are even. Fig. 6 depicts handover locations for a bias configuration change from -4dB to -6dB for the small cell 205 bias value. The macro cell base station transceiver 100 is assumed to be located on the right and the small cell base station transceiver 200 is assumed to be located on the left. Fig. 6 shows the -4dB old configuration at the top and the -6dB new configuration at the bottom. It is assumed that macro UEs and small cell UEs are reconfigured at the same time and with the same bias value. Hence, handover locations for macro UEs towards the small cell 205 and for the small cell UEs toward the macro cell 105 are collocated before and after the reconfiguration. All UEs within the macro and small/pico/metro cells 105, 205 are reconfigured within a short time frame and a new symmetrical HO point is established.

In the following it is assumed that up to 10 pico/metro cells might be deployed within a footprint of one macro cell. Peaks of signaling traffic, which could occur many times, may be reduced by embodiments. There may be a dedicated SON algorithm within each small cell selecting an optimal or a desired bias value. Embodiments may reduce a number of reconfigurations within a short time frame. High numbers of reconfigurations could occur if the SON algorithms within the small/pico/metro cells are not synchronized, which could further increase the signaling load. Embodiments may delay the reconfiguration for the delay period and may therefore prevent a signaling overload of the air interface. If the small/pico/metro cell is not in overload there may not be a pressure for an immediate reconfiguration. Embodiments may take into account the load condition of the small cell 205. The control module 16 of the macro cell base station transceiver apparatus 10 may be operable to receive information related to a load condition from the small cell base station transceiver 200. The control module 16 may be further operable to base the delay period on the information on the load condition at the small cell base station transceiver 200. In some embodiments the control module 16 may determine a shorter delay period when the information related to the load condition indicates a first higher load than when the information related to the load condition indicates a second lower load.

In some embodiments the delay period may correspond to a predefined Time Interval (TI), e.g. for one minute the macro cell 105 receives from all pico/metro cells 205, 255 within its footprint the requests for bias modification with the information related to handover measurement. The proposed new bias values may be acknowledged by the macro cell 105. In other words the control module 16 at the macro cell apparatus 10 may be operable to provide acknowledgement information to the small cell base station transceiver after reception of the information relating to handover measurements. Although the information is received at the macro cell apparatus 10 the reconfiguration or forwarding of the information to a mobile transceiver 400 may not be executed immediately. This may result in an unsymmetrical HandOver (HO) point, as reconfiguration may have been executed immediately at the small cell 205.

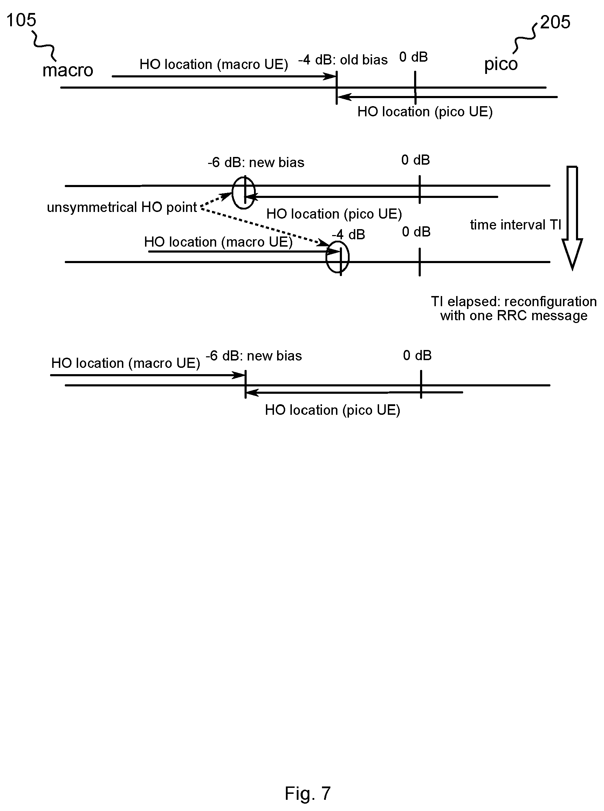

Asymmetrical HO may not be critical, for example, no HO ping pongs (back and forward HOs between two cells in a short time frame) may occur. After the time interval or the delay period has elapsed, the macro cell 105 may reconfigure each of UEs with only one message (e.g. RRC), which may comprise information related to handover measurements for multiple small cells. Such a message may include all or multiple new bias values and signaling messages may be saved. The concept of embodiments is further illustrated in Fig. 7. Fig. 7 illustrates HO locations for different bias value configurations, where the macro cell base station transceiver 100 is assumed on the left and the small cell base station transceiver is assumed on the right. Fig. 7 shows a -4dB symmetrical HO configuration at the top. In the middle viewgraph the HO configuration is unsymmetrical. It is assumed that the small cell UEs are configured to the new bias value of -6dB and hence the coverage of the small cell 205 is extended for small cell UEs. The macro UEs however have not yet been reconfigured and hence still base their HO measurements on the old bias value of - 4dB and for the macro UEs the coverage of the small cell 205 is not yet extended.

This asymmetric configuration may last until the delay period or TI has expired and the macro UEs are also configured, e.g. using only one RRC message, to -6dB as shown at the bottom of Fig. 7. In some embodiments the macro UEs may be reconfigured together using a multicast or broadcast message. The control module 36 of the base station transceiver apparatus 30 may be operable to provide the information related to the handover measurement to the two or more mobile transceivers 400, 410 using the transceiver module 34 on a broadcast or multicast channel.

In some embodiments the UEs are informed about bias values of multiple other cells in a single message. The control module 16 of the macro cell apparatus 10 may be operable to receive further information related to a handover measurement from another small cell base station transceiver 255 during the delay period using the interface 12. The control module 16 may be operable to provide the information related to handover measurements on signals transmitted by the two small cell base station transceivers 200, 255 to the mobile transceiver 400 using the transceiver module 14. At the mobile transceiver apparatus 40 the control module 44 may accordingly be operable to receive the information on a broadcast or multicast channel. In some embodiments multiple UEs are informed about bias values of multiple other cells in a single multicast or broadcast message.

In a further embodiment TI may be defined via the information related to the time setting by the by the small cell, e.g. the small/pico cell 205 may control an update cycle for the handover information. Accordingly, the control module 16 of the macro cell base station transceiver apparatus 10 may be operable to receive information related to a delay setting for the delay period from the small cell base station transceiver 200. For example, the information related to the delay setting may comprise information related to a TI. For example, a certain value of the TI may indicate infinity. An infinite TI may indicate that the new bias value should only be applied for UEs switched on within the macro cell 105 (UE 400 in Fig. 5) or entering the macro cell 105 via handover from other macro cells or other small/pico/cells (UE 410 in Fig. 5). As these UEs anyway need a new or a re-configuration the new bias values may be applied at this moment. As no dedicated re-configuration may occur the signaling load may be reduced.

For example, in some embodiments an X2 message may be enhanced with a starting time at which the re-configuration should start, i.e. the small cell base station transceiver apparatus 20 (its control module 16, respectively) may define TI and/or the starting time of TI. In a similar way a TI=0 may trigger a dedicated reaction, e.g. when smaller bias values are requested. In some embodiments, the macro cell apparatus 10 may decide on which TI value shall be applied, if many small/pico/metro cells 205 propose different TI values.

In the following reconfigurations to smaller bias values are considered with the help of Fig. 5. Small or pico cell 255 may serve many UEs, which are in addition located mostly within the expanded cell area 265. The SON algorithm for the small/pico cell 255 may decide, based on e.g. a limited number of ABS frames and the overload within the small/pico/metro cell 255, that the cell range expansion 265 is too high and will define a lower bias value. This new bias value may force or trigger UEs within the small/pico/metro cell 255 to request a handover to the macro cell 105. The load within the small/pico/metro cell 255 may decrease. The new bias value, which may be communicated via the X2 interface 12, 22, to the macro cell 105 may not be applied immediately by the macro cell 105 according to some embodiments. Hence, further handover requests from the macro cell 105 to the small/pico/metro cell 205 may not be directly avoided and further HOs to the small/pico/metro cell 205 would further increase the load within the small/pico/metro cell 205.

Embodiments of the macro cell apparatus 10 may comprise a control module 16, which is further operable to receive information related to a handover request from the mobile transceiver 400 using the transceiver module 14. The information related to the handover request may be received after the information related to handover measurements from the small cell base station transceiver 200 and before transmission of an according message or provision of the information to the mobile transceiver 400. The control module 16 may then be further operable to deny the handover request. This behavior may be applied when smaller bias values are to be configured. The control module 16 may be operable to deny the handover request only when information related to a bias value comprised in the information related to the handover indicates a bias value, which is smaller than a present bias value configured at the mobile transceiver 400.

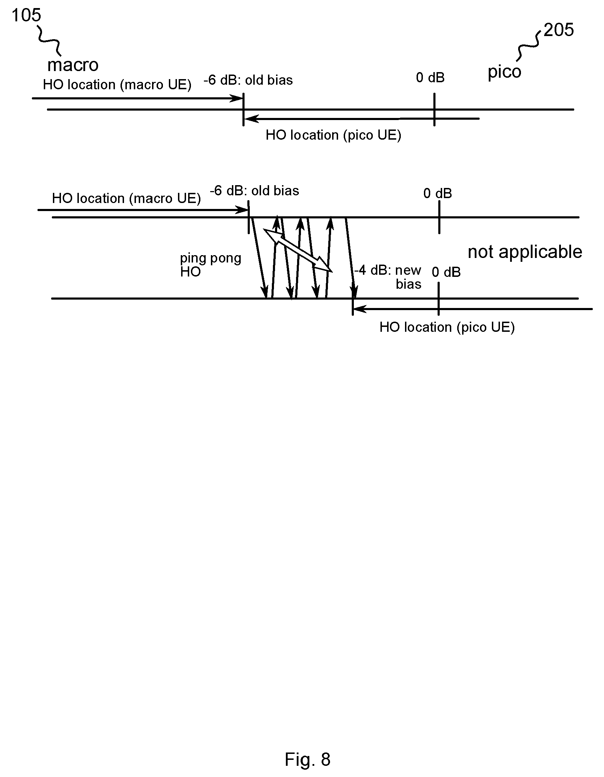

An unsymmetrical handover point in case of a smaller bias value could lead to unwanted ping pong handovers between the macro cell 105 and the small/pico/metro cell 255 as will be illustrated by Fig. 8. In line with the prior figures Fig. 8 shows a symmetrical HO configuration at the top with the macro cell 105 on the right and the small cell 255 on the left. Marco cell UEs and small cell UEs are assumed to be configured with symmetric bias values at -6dB. Fig. 8 shows the HO location after asymmetric reconfiguration, in which the small cell UEs are configured with the new bias value of -4dB, while the macro cell UEs are still configured with the old bias value of -6dB. Accordingly, a small cell UE would request HO to the macro cell 105 at the -4dB location. Once handed over to the macro cell 105 it would request HO to the small cell because now -6dB apply, which could result in a ping pong effect.

Embodiments may avoid the ping pong effect in the macro cell 105, by denying the handover requests back to the small cell 255. In some embodiments, after a smaller bias values have been transmitted from the small/pico/metro cell 255 to the macro cell 105, the macro cell 105 may block UE requests for a handover towards the small/pico/metro 255, for example, no handover command may be transmitted to a UE and the UE may stay further connected to the macro cell 105.

In further embodiments the control module 16 may be operable to reconfigure all UEs requesting a handover to the small/pico/metro cell 255 immediately with the new small bias value. For these UEs a symmetrical HO point may exist. All other UEs within the macro cell 105, which may not be approaching the small/pico/metro cell 255 may not be reconfigured or may be reconfigured after the delay period. The remaining UEs might be reconfigured with the new bias value if the time interval TI elapsed, for example, the concept for larger bias values can be applied. In further embodiments the control module 16 is operable to adapt the delay period to a number of received handover requests. For example, if too many HO requests by macro UEs occur a reconfiguration may be carried out. That is to say, some embodiments may consider a trade-off between the signaling overhead of the bias reconfiguration versus the signaling overhead generated later denied HO request generated by UEs in an asymmetric bias configuration.

In further embodiments the small/pico cell 255 may have a high load but may not be currently overloaded, the small/pico cell 205 may define a smaller bias value but might be willing or capable to accept a limited number of further UEs. The macro cell 105 may then send a handover request via the X2 interface to the small/pico/metro cell 205, which may then be either accepted or rejected by the pico/metro cell 205. Accordingly, the control module 16 at the macro cell apparatus 10 may be further operable to receive information related to a handover request from the mobile transceiver 400 using the transceiver module 14. The control module 16 may further be operable to forward information related to the handover request to the small cell base station transceiver 200, 255 using the interface 12. The control module 16 may be operable to receive information related to accepting or denying the handover request from the small cell base station transceiver 200, 255 using the interface 12. The control module 16 may further be operable to accept or deny the handover request based on the information from the small cell base station transceiver 200, 255. Accordingly, at the small cell apparatus 20 the control module 24 may be further operable to receive information related to a handover request of the mobile transceiver 400 from the macro cell base station transceiver 100 using the interface 22. The control module 24 may be operable to determine information related to accepting or denying the handover request, and the control module 24 may be operable to provide the information related to accepting or denying the handover request to the macro cell base station transceiver 100 using the interface 22.

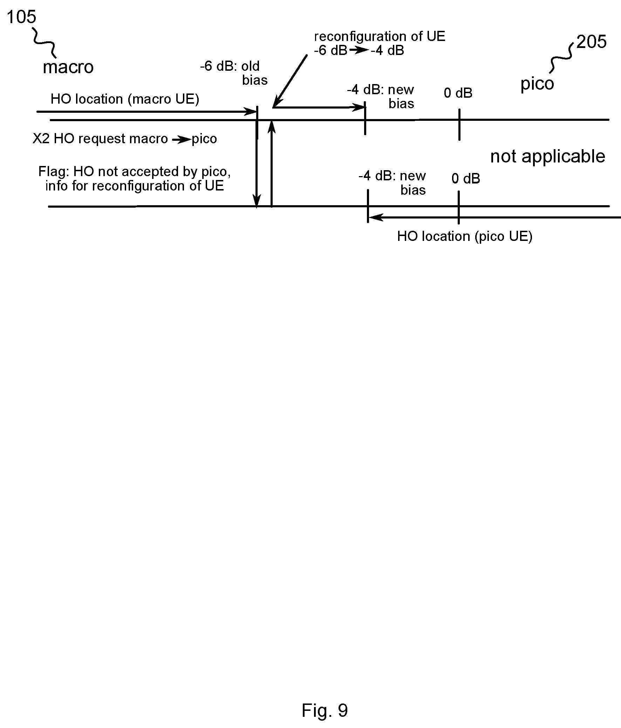

For example, in some embodiments a rejection a flag may be transmitted via X2 indicating that for a certain UE a reconfiguration within the macro cell 205 towards the new bias is desired as illustrated in Fig. 9. Fig. 9 illustrates HO-locations in a similar scheme as the previous Figs. At first an asymmetrical HO configuration is applied, a macro UE is configured with -6dB bias and requests a HO to the pico cell 205. The handover request is forwarded from the macro cell 105 to the pico cell 205, which replies with a flag indicating that the HO is not accepted by the pico cell 205. Instead information on a reconfiguration (bias value of -4dB) is requested. The macro UE is then reconfigured to -4dB. In some embodiments the flag may be standardized. In further embodiments, if the handover request is accepted by the small/pico/metro cell 205, the old bias value may be allocated to the UE, now served by the small/pico/metro 205 to avoid HO ping pongs.

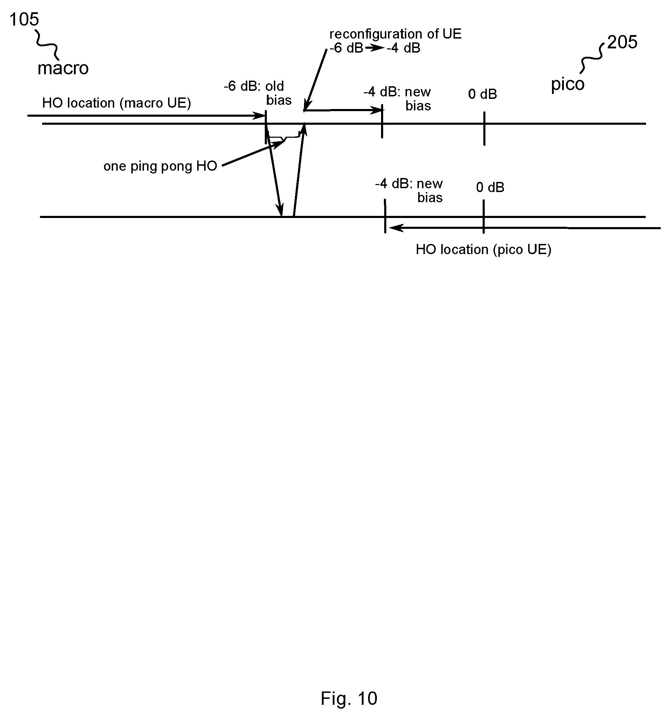

Another embodiment is illustrated with the help of Fig. 10. Fig. 10 depicts HO locations similar to the previous Figs. In the present embodiment the macro cell 105 sends out a handover request via the X2 interface 12, 22 to the small/pico/metro cell 205, which accepts the requests, i.e., the UE carries out a handover to the small/pico/metro cell 205. The UE, now configured by the small/pico/metro cell 205 with the new bias value (-4dB), may request immediately a handover back to the macro cell 105. The macro cell 105 detects the ping pong handover and reconfigures the UE with the new bias value (-4dB) to avoid further ping pongs.

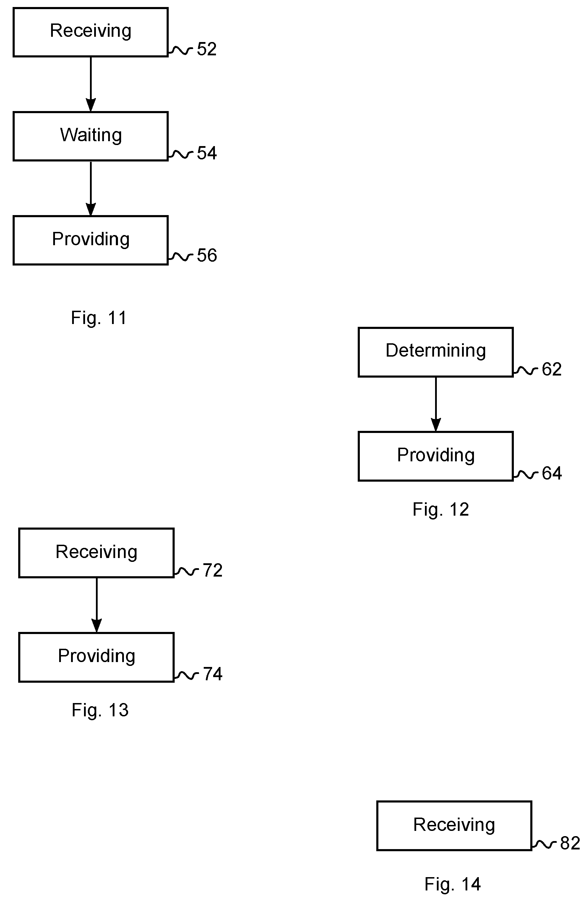

Fig. 11 illustrates a block diagram of a flow chart of an embodiment of a method for a macro cell base station transceiver 100, which is operable to provide information related to handover between the macro cell base station transceiver 100 and a small cell base station transceiver 200 to a mobile transceiver 400. The macro cell base station transceiver 100 comprises a coverage area, which at least partly surrounds a coverage area of the small cell base station transceiver 200. The method comprises receiving 52 information related to a handover measurement from the small cell base station transceiver 200. The method further comprises waiting 54 for a delay period and providing 56 the information related to the handover measurement to the mobile transceiver 300 after the delay period.

Fig. 12 illustrates a block diagram of a flow chart of an embodiment of a method for a small cell base station transceiver 200. The small cell base station transceiver 200 comprises a coverage area, which is at least partly surrounded by a coverage area of a macro cell base station transceiver 100. The method comprises determining 62 a time setting for information related to handover measurements for a mobile transceiver 400 associated with the macro cell base station transceiver 100. The method further comprises providing 64 the information related to the time setting and the information related to handover measurements for the mobile transceiver 400 to the macro cell base station transceiver 100.

Fig. 13 illustrates a block diagram of a flow chart of an embodiment of a method for a base station transceiver 100, 200 operable to provide information related to handover between the base station transceiver 100, 200 and another base station transceiver 200, 100 to two or more mobile transceivers 400, 410. The method comprises receiving 72 information related to a handover measurement from the other base station transceiver 200, 100. The method further comprises providing 74 the information related to the handover measurement to the two or more mobile transceivers 400, 410 on a channel common to the two or more mobile transceivers 400, 410.

Fig. 14 illustrates a block diagram of a flow chart of an embodiment of a method for a mobile transceiver 400, 410. The method comprises receiving 82 information related to handover measurements on signals transmitted by one or more base station transceivers 200, 100 from the base station transceiver 100, 200 on a channel common to two or more mobile transceivers 400, 410.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", etc., may be provided through the use of dedicated hardware, such as "a controller", "a transmitter", "a receiver", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

## Claims

1. An apparatus (10) for a macro cell base station transceiver (100), the apparatus (10) being operable to provide information related to handover between the macro cell base station transceiver (100) and a small cell base station transceiver (200) to a mobile transceiver (400), the macro cell base station transceiver (100) comprising a coverage area, which at least partly surrounds a coverage area of the small cell base station transceiver (200), the apparatus (10) comprising
an interface (12) operable to communicate with the small cell base station transceiver (200);
a transceiver module (14) operable to communicate with the mobile transceiver (400); and
a control module (16) operable to:
control the interface (12) and the transceiver module (14),
receive information related to a handover measurement from the small cell base station transceiver (200) using the interface (12),
wait for a delay period, and
provide the information related to the handover measurement to the mobile transceiver (400) using the transceiver module (14) after the delay period.

2. The apparatus (10) of claim 1, wherein the control module (16) is operable to receive information related to a delay setting for the delay period from the small cell base station transceiver (200).

3. The apparatus (10) of claim 1, wherein the control module (16) is operable to receive information related to a load condition from the small cell base station transceiver (200), and wherein the control module (16) is operable to base the delay period on the information on the load condition at the small cell base station transceiver (200).

4. The apparatus (10) of claim 1, wherein the information related to handover comprises information related to a bias value, which is to be applied to measurement results on radio signals of the small cell base station transceivers at the mobile transceiver (400).

5. The apparatus (10) of claim 1, wherein the control module (16) is operable to receive further information related to a handover measurement from another small cell base station transceiver (255) during the delay period using the interface (12), and wherein the control module (16) is operable to provide the information related to handover measurements on signals transmitted by the two small cell base station transceivers (200;210) to the mobile transceiver (400) using the transceiver module (14).

6. The apparatus (10) of claim 1, wherein the control module (16) is further operable to receive information related to a handover request from the mobile transceiver (400) using the transceiver module (14), the information related to the handover request being received after the information related to handover measurements from the small cell base station transceiver (200) and before providing the information to the mobile transceiver (400), the control module (16) being further operable to deny the handover request.

7. The apparatus (10) of claim 6, wherein the control module (16) is operable to deny the handover request only when information related to a bias value comprised in the information related to the handover indicates a bias value, which is smaller than a present bias value configured at the mobile transceiver (400).

8. The apparatus (10) of claim 1, wherein the control module (16) is further operable to receive information related to a handover request from the mobile transceiver (400) using the transceiver module (14), and wherein the control module (16) is operable to forward information related to the handover request to the small cell base station transceiver (200; 255) using the interface (12), and wherein the control module (16) is operable to receive information related to accepting or denying the handover request from the small cell base station transceiver (200; 255) using the interface (12), and wherein the control module (16) is further operable to accept or deny the handover request based on the information from the small cell base station transceiver (200;255).

9. The apparatus (10) of claim 1, wherein the control module (16) is operable to adapt the delay period to a number of received handover requests.

10. An apparatus (20) for a small cell base station transceiver (200), the small cell base station transceiver (200) comprising a coverage area, which is at least partly surrounded by a coverage area of a macro cell base station transceiver (100), the apparatus (20) comprising
an interface (22) operable to communicate with the macro cell base station transceiver (100);
a control module (24) operable to:
control the interface (22),
determine a time setting for information related to handover measurements for a mobile transceiver (400) associated with the macro cell base station transceiver (100); and
provide the information related to the time setting and the information related to handover measurements for the mobile transceiver (400) to the macro cell base station transceiver (100).

11. The apparatus (20) of claim 10, wherein the information related to handover comprises information related to a bias value, which is to be applied to measurement results on radio signals of the small cell base station transceiver (200) at the mobile transceiver (400).

12. The apparatus (20) of claim 10, wherein the information related to handover comprises information related to a load condition of the small cell base station transceiver (200) at the mobile transceiver (400).

13. The apparatus (20) of claim 1, wherein the control module (24) is further operable to receive information related to a handover request of the mobile transceiver (400) from the macro cell base station transceiver (100) using the interface (22), wherein the control module (24) is operable to determine information related to accepting or denying the handover request, and wherein the control module (24) is operable to provide the information related to accepting or denying the handover request to the macro cell base station transceiver (100) using the interface (22).

14. A method for a macro cell base station transceiver (100) being operable to provide information related to handover between the macro cell base station transceiver (100) and a small cell base station transceiver (200) to a mobile transceiver (400), the macro cell base station transceiver (100) comprising a coverage area, which at least partly surrounds a coverage area of the small cell base station transceiver (200), the method comprising
Receiving (52) information related to a handover measurement from the small cell base station transceiver (200);
Waiting (54) for a delay period;
Providing (56) the information related to the handover measurement to the mobile transceiver (400) after the delay period.

15. A method (20) for a small cell base station transceiver (200), the small cell base station transceiver (200) comprising a coverage area, which is at least partly surrounded by a coverage area of a macro cell base station transceiver (100), the method comprising
Determining (62) a time setting for information related to handover measurements for a mobile transceiver (400) associated with the macro cell base station transceiver (100); and
Providing (64) the information related to the time setting and the information related to handover measurements for the mobile transceiver (400) to the macro cell base station transceiver (100).

16. A computer program having a program code for performing one of the methods of claim 14 or 15, when the computer program is executed on a processor, computer, or programmable hardware.

## Patentansprüche

1. Vorrichtung (10) für einen makrozelligen Basisstations-Senderempfänger (100), wobei die Vorrichtung (10) ausgelegt ist für das Ausführen einer informationsbezogenen Weiterleitung zwischen dem makrozelligen Basisstations-Senderempfänger (100) und einem kleinzelligen Basisstations-Senderempfänger (200) an einen mobilen Senderempfänger (400), wobei der makrozellige Basisstations-Senderempfänger (100) einen Abdeckungsbereich umfasst, welcher zumindest teilweise einen Abdeckungsbereich des kleinzelligen Basisstations-Senderempfängers (200) umgibt, wobei die Vorrichtung (10) umfasst:
eine Schnittstelle (12), die ausgelegt ist für die Kommunikation mit dem kleinzelligen Basisstations-Senderempfänger (200);
ein Senderempfängermodul (14), das ausgelegt ist für das Kommunizieren mit dem mobilen Senderempfänger (400); und
ein Steuerungsmodul (16), das ausgelegt ist für:
Steuern der Schnittstelle (12) und des Senderempfängermoduls (14),
Empfang von Informationen im Zusammenhang mit einer Weiterleitungsmessung durch den kleinzelligen Basisstations-Senderempfänger (200) unter Verwendung der Schnittstelle (12),
Warten auf einen Verzögerungszeitraum, und
Bereitstellen der Informationen zur Weiterleitungsmessung an den mobilen Senderempfänger (400) unter Verwendung des Senderempfängermoduls (14) nach dem Verzögerungszeitraum.

2. Vorrichtung (10) nach Anspruch 1, wobei das Steuerungsmodul (16) ausgelegt ist für den Empfang von Informationen im Zusammenhang mit einer Verzögerungseinstellung für den Verzögerungszeitraum von dem kleinzelligen Basisstations-Senderempfänger (200).

3. Vorrichtung (10) nach Anspruch 1, wobei das Steuerungsmodul (16) ausgelegt ist für den Empfang von Informationen im Zusammenhang mit einer Ladebedingung von dem kleinzelligen Basisstations-Senderempfänger (200) und wobei das Steuerungsmodul (16) dafür ausgelegt ist, den Verzögerungszeitraum auf der Grundlage der Informationen zu der Ladebedingung am kleinzelligen Basisstations-Senderempfänger (200) festzulegen.

4. Vorrichtung (10) nach Anspruch 1, wobei die auf die Weiterleitung bezogenen Informationen solche Informationen umfassen, die sich auf einen Vorspannungswert beziehen, welcher auf die Messergebnisse zu Funksignalen des kleinzelligen Basisstations-Senderempfängers an dem mobiler Senderempfänger (400) anzuwenden sind.

5. Vorrichtung (10) nach Anspruch 1, wobei das Steuerungsmodul (16) ausgelegt ist für den Empfang weiterer Informationen im Zusammenhang mit einer Weiterleitungsmessung von einem weiteren kleinzelligen Basisstations-Senderempfänger (255) während des Verzögerungszeitraums unter Verwendung der Schnittstelle (12), und wobei das Steuerungsmodul (16) ausgelegt ist für die Bereitstellung der auf Weiterleitungsmessungen bezogenen Informationen auf Signalen, die von den zwei kleinzelligen Basisstations-Senderempfängern (200; 210) unter Verwendung des Senderempfängermoduls (14) an den mobilen Senderempfänger (400) gesendet werden.

6. Vorrichtung (10) nach Anspruch 1, wobei das Steuerungsmodul (16) weiterhin ausgelegt ist für den Empfang von auf eine Weiterleitungsanfrage des mobilen Senderempfängers (400) bezogenen Informationen unter Verwendung des Senderempfängermoduls (14), wobei die auf die Weiterleitungsanfrage bezogenen Informationen nach den Informationen bezüglich der Weiterleitungsmessung von dem kleinzelligen Basisstations-Senderempfänger (200) und vor der Bereitstellung der Informationen für den mobilen Senderempfänger (400) empfangen werden, wobei das Steuerungsmodul (16) weiterhin dafür ausgelegt ist, die Weiterleitungsanfrage zurückzuweisen.

7. Vorrichtung (10) nach Anspruch 6, wobei das Steuerungsmodul (16) dafür ausgelegt, die Weiterleitungsanfrage nur dann zurückzuweisen, wenn die Informationen bezüglich eines Vorspannungswerts, die in den Informationen bezüglich der Weiterleitung enthalten sind, einen Vorspannungswert angeben, der kleiner ist als ein gegenwärtiger, im mobilen Senderempfänger (400) konfigurierter Vorspannungswert.

8. Vorrichtung (10) nach Anspruch 1, wobei das Steuerungsmodul (16) weiterhin ausgelegt ist für den Empfang von Informationen bezüglich einer Weiterleitungsanfrage von dem mobilen Senderempfänger (400) unter Verwendung des Senderempfängermoduls (14) und wobei das Steuerungsmodul (16) ausgelegt ist für das Weiterleiten von Informationen bezüglich der Weiterleitungsanfrage an den kleinzelligen Basisstations-Senderempfänger (200; 255) unter Verwendung der Schnittstelle (12), und wobei das Steuerungsmodul (16) ausgelegt ist für den Empfang von Informationen bezüglich des Akzeptierens oder Zurückweisens der Weiterleitungsanfrage von dem kleinzelligen Basisstations-Senderempfänger (200; 255) unter Verwendung der Schnittstelle (12), und wobei das Steuerungsmodul (16) weiterhin ausgelegt ist für das Akzeptieren oder Zurückweisen der Weiterleitungsanfrage auf der Grundlage der Informationen von dem kleinzelligen Basisstations-Senderempfänger (200; 255).

9. Vorrichtung (10) nach Anspruch 1, wobei das Steuerungsmodul (16) ausgelegt ist für das Anpassen des Verzögerungszeitraums an eine Anzahl empfangener Weiterleitungsanfragen.

10. Vorrichtung (20) für einen kleinzelligen Basisstations-Senderempfänger (200), wobei der kleinzellige Basisstations-Senderempfänger (200) einen Abdeckungsbereich umfasst, welcher zumindest teilweise von einem Abdeckungsbereich eines makrozelligen Basisstations-Senderempfängers (100) umgeben wird, wobei die Vorrichtung (20) umfasst:
Schnittstelle (22), die ausgelegt ist für die Kommunikation mit dem makrozelligen Basisstations-Senderempfänger (100);
Steuerungsmodul (24), das ausgelegt ist für:
Steuerung der Schnittstelle (22),
Festlegen einer Zeiteinstellung für Informationen im Zusammenhang mit Weiterleitungsmessungen für einen mobilen Senderempfänger (400), welcher dem makrozelligen Basisstations-Senderempfänger (100) zugeordnet ist; und
Bereitstellen der Informationen bezüglich der Zeiteinstellung und der Informationen bezüglich der Weiterleitungsmessungen für den mobilen Senderempfänger (400) für den makrozelligen Basisstations-Senderempfänger (100).

11. Vorrichtung (20) nach Anspruch 10, wobei die auf die Weiterleitung bezogenen Informationen solche Informationen umfassen, die sich auf einen Vorspannungswert beziehen, welcher auf die Messergebnisse zu Funksignalen des kleinzelligen Basisstations-Senderempfängers (200) an dem mobiler Senderempfänger (400) anzuwenden sind.

12. Die Vorrichtung (20) nach Anspruch 10, wobei die auf die Weiterleitung bezogenen Informationen solche Informationen umfassen, die sich auf eine Ladebedingung des kleinzelligen Basisstations-Senderempfängers (200) an dem mobiler Senderempfänger (400) beziehen.

13. Vorrichtung (20) nach Anspruch 1, wobei das Steuerungsmodul (24) weiterhin ausgelegt ist für den Empfang von Informationen bezüglich einer Weiterleitungsanfrage des mobilen Senderempfängers (400) von dem makrozelligen Basisstations-Senderempfänger (100) unter Verwendung der Schnittstelle (22), wobei das Steuerungsmodul (24) dafür ausgelegt ist, auf das Akzeptieren oder Verweigern der Weiterleitungsanfrage bezogene Informationen festzulegen, und wobei das Steuerungsmodul (24) dafür ausgelegt ist, die auf das Akzeptieren oder Ablehnen der Weiterleitungsanfrage an den makrozelligen Basisstations-Senderempfänger (100) unter Verwendung der Schnittstelle (22) bezogenen Informationen zur Verfügung zu stellen.

14. Verfahren für einen makrozelligen Basisstations-Senderempfänger (100), ausgelegt für das Ausführen einer informationsbezogenen Weiterleitung zwischen dem makrozelligen Basisstations-Senderempfänger (100) und einem kleinzelligen Basisstations-Senderempfänger (200) an einen mobilen Senderempfänger (400), wobei der makrozellige Basisstations-Senderempfänger (100) einen Abdeckungsbereich umfasst, welcher zumindest teilweise einen Abdeckungsbereich des kleinzelligen Basisstations-Senderempfängers (200) umgibt, wobei das Verfahren umfasst:
Empfangen (52) von Informationen im Zusammenhang mit einer Weiterleitungsmessung von dem kleinzelligen Basisstations-Senderempfänger (200);
Warten (54) auf einen Verzögerungszeitraum;
Bereitstellen (56) der Informationen zur Weiterleitungsmessung an den mobilen Senderempfänger (400) nach dem Verzögerungszeitraum.

15. Verfahren (20) für einen kleinzelligen Basisstations-Senderempfänger (200), wobei der kleinzellige Basisstations-Senderempfänger (200) einen Abdeckungsbereich umfasst, welcher zumindest teilweise von einem Abdeckungsbereich eines makrozelligen Basisstations-Senderempfängers (100) umgeben wird, wobei das Verfahren umfasst:
Festlegen (62) einer Zeiteinstellung für Informationen im Zusammenhang mit Weiterleitungsmessungen für einen mobilen Senderempfänger (400), welcher dem makrozelligen Basisstations-Senderempfänger (100) zugeordnet ist; und
Bereitstellen (64) der Informationen bezüglich der Zeiteinstellung und der Informationen bezüglich der Weiterleitungsmessungen für den mobilen Senderempfänger (400) für den makrozelligen Basisstations-Senderempfänger (100).

16. Computerprogramm mit einem Programmcode zur Umsetzung eines der Verfahren nach den Ansprüchen 14 oder 15, wenn das Computerprogramm auf einem Prozessor oder Computer bzw. mit einer programmierbaren Hardware ausgeführt wird.

## Revendications

1. Appareil (10) pour un émetteur-récepteur (100) de station de base macrocellulaire, l'appareil (10) pouvant fonctionner pour fournir des informations relatives à un transfert entre l'émetteur-récepteur (100) de station de base macrocellulaire et un émetteur-récepteur (200) de station de base femtocellulaire vers un émetteur-récepteur mobile (400), l'émetteur-récepteur (100) de station de base macrocellulaire comprenant une zone de couverture, qui entoure au moins en partie une zone de couverture de l'émetteur-récepteur (200) de station de base femtocellulaire, l'appareil (10) comprenant :
une interface (12) pouvant fonctionner pour communiquer avec l'émetteur-récepteur (200) de station de base femtocellulaire ;
un module d'émetteur-récepteur (14) pouvant fonctionner pour communiquer avec l'émetteur-récepteur mobile (400) ; et
un module de commande (16) pouvant fonctionner pour :
commander l'interface (12) et le module d'émetteur-récepteur (14),
recevoir des informations relatives à une mesure de transfert depuis l'émetteur-récepteur (200) de station de base femtocellulaire au moyen de l'interface (12),
attendre une période de retard, et
fournir les informations relatives à la mesure de transfert à l'émetteur-récepteur mobile (400) au moyen du module d'émetteur-récepteur (14) après la période de retard.

2. Appareil (10) selon la revendication 1, dans lequel le module de commande (16) peut fonctionner pour recevoir des informations relatives à un réglage de retard pour la période de retard depuis l'émetteur-récepteur (200) de station de base femtocellulaire.

3. Appareil (10) selon la revendication 1, dans lequel le module de commande (16) peut fonctionner pour recevoir des informations relatives à une condition de charge de l'émetteur-récepteur (200) de station de base femtocellulaire, et dans lequel le module de commande (16) peut fonctionner pour baser la période de retard sur les informations sur la condition de charge de l'émetteur-récepteur (200) de station de base femtocellulaire.

4. Appareil (10) selon la revendication 1, dans lequel les informations relatives au transfert comprennent des informations relatives à une valeur de polarisation qui doit être appliquée aux résultats de mesure sur des signaux radio de l'émetteur-récepteur de station de base femtocellulaire dans l'émetteur-récepteur mobile (400).

5. Appareil (10) selon la revendication 1, dans lequel le module de commande (16) peut fonctionner pour recevoir des informations supplémentaires relatives à une mesure de transfert depuis un autre émetteur-récepteur (255) de station de base femtocellulaire pendant la période de retard au moyen de l'interface (12), et dans lequel le module de commande (16) peut fonctionner pour fournir les informations relatives aux mesures de transfert sur les signaux transmis par les deux émetteurs-récepteurs (200 ; 210) de station de base femtocellulaire à l'émetteur-récepteur mobile (400) au moyen du module d'émetteur-récepteur (14).

6. Appareil (10) selon la revendication 1, dans lequel le module de commande (16) peut en outre fonctionner pour recevoir des informations relatives à une demande de transfert depuis l'émetteur-récepteur mobile (400) au moyen du module d'émetteur-récepteur (14), les informations relatives à la demande de transfert étant reçues après les informations relatives aux mesures de transfert depuis l'émetteur-récepteur (200) de station de base femtocellulaire et avant de fournir les informations à l'émetteur-récepteur mobile (400), le module de commande (16) pouvant en outre fonctionner pour refuser la demande de transfert.

7. Appareil (10) selon la revendication 6, dans lequel le module de commande (16) peut fonctionner pour refuser la demande de transfert uniquement lorsque les informations relatives à une valeur de polarisation comprises dans les informations relatives au transfert indiquent une valeur de polarisation inférieure à une valeur de polarisation présente configurée sur l'émetteur-récepteur mobile (400).

8. Appareil (10) selon la revendication 1, dans lequel le module de commande (16) peut en outre fonctionner pour recevoir des informations relatives à une demande de transfert depuis l'émetteur-récepteur mobile (400) au moyen du module d'émetteur-récepteur (14), et dans lequel le module de commande (16) peut fonctionner pour transférer les informations relatives à la demande de transfert à l'émetteur-récepteur (200 ; 255) de station de base femtocellulaire au moyen de l'interface (12), et dans lequel le module de commande (16) peut fonctionner pour recevoir des informations relatives à l'acceptation ou au refus de la demande de transfert depuis l'émetteur-récepteur (200 ; 255) de station de base femtocellulaire au moyen de l'interface (12) et dans lequel le module de commande (16) peut en outre fonctionner pour accepter ou refuser la demande de transfert sur la base des informations de l'émetteur-récepteur (200 ; 255) de station de base femtocellulaire.

9. Appareil (10) selon la revendication 1, dans lequel le module de commande (16) peut fonctionner pour adapter la période de retard à un nombre de demandes de transfert reçues.

10. Appareil (20) pour un émetteur-récepteur (200) de station de base femtocellulaire, l'émetteur-récepteur (200) de station de base femtocellulaire comprenant une zone de couverture, qui est au moins en partie entourée par une zone de couverture d'un émetteur-récepteur (100) de station de base macrocellulaire, l'appareil (20) comprenant :
une interface (22) pouvant fonctionner pour communiquer avec l'émetteur-récepteur (100) de station de base macrocellulaire ;
un module de commande (24) pouvant fonctionner pour :
commander l'interface (22),
déterminer un réglage de temps pour des informations relatives à des mesures de transfert pour un émetteur-récepteur mobile (400) associé à l'émetteur-récepteur (100) de station de base macrocellulaire ; et
fournir les informations relatives au réglage du temps et les informations relatives aux mesures de transfert pour l'émetteur-récepteur mobile (400) à l'émetteur-récepteur (100) de station de base macrocellulaire.

11. Appareil (20) selon la revendication 10, dans lequel les informations relatives au transfert comprennent des informations relatives à une valeur de polarisation qui doit être appliquée aux résultats de mesure sur les signaux radio de l'émetteur-récepteur (200) de station de base femtocellulaire dans l'émetteur-récepteur mobile (400).

12. Appareil (20) selon la revendication 10, dans lequel les informations relatives au transfert comprennent des informations relatives à une condition de charge de l'émetteur-récepteur (200) de station de base femtocellulaire dans l'émetteur-récepteur mobile (400).

13. Appareil (20) selon la revendication 10, dans lequel le module de commande (24) peut en outre fonctionner pour recevoir des informations relatives à une demande de transfert de l'émetteur-récepteur mobile (400) depuis l'émetteur-récepteur (100) de station de base macrocellulaire au moyen de l'interface (22), dans lequel le module de commande (24) peut fonctionner pour déterminer des informations relatives à l'acceptation ou au refus de la demande de transfert, et dans lequel le module de commande (24) peut en outre fonctionner pour fournir les informations relatives à l'acceptation ou au refus de la demande de transfert à l'émetteur-récepteur (100) de station de base macrocellulaire au moyen de l'interface (22).

14. Procédé pour un émetteur-récepteur (100) de station de base macrocellulaire pouvant fonctionner pour fournir des informations relatives à un transfert entre l'émetteur-récepteur (100) de station de base macrocellulaire et un émetteur-récepteur (200) de station de base femtocellulaire à un émetteur-récepteur mobile (400), l'émetteur-récepteur (100) de station de base macrocellulaire comprenant une zone de couverture, qui entoure au moins en partie une zone de couverture de l'émetteur-récepteur (200) de station de base femtocellulaire, le procédé comprenant les étapes suivantes :
recevoir (52) des informations relatives à une mesure de transfert depuis l'émetteur-récepteur (200) de station de base femtocellulaire ;
attendre (54) une période de retard ;
fournir (56) les informations relatives à la mesure de transfert à l'émetteur-récepteur mobile (400) après la période de retard.

15. Procédé (20) pour un émetteur-récepteur (200) de station de base femtocellulaire, l'émetteur-récepteur (200) de station de base femtocellulaire comprenant une zone de couverture, qui est au moins en partie entourée par une zone de couverture d'un émetteur-récepteur (100) de station de base macrocellulaire, le procédé comprenant les étapes suivantes :
déterminer (62) un réglage de temps pour des informations relatives à des mesures de transfert pour un émetteur-récepteur mobile (400) associé à l'émetteur-récepteur (100) de station de base macrocellulaire ; et
fournir (64) les informations relatives au réglage de temps et les informations relatives aux mesures de transfert pour l'émetteur-récepteur mobile (400) à l'émetteur-récepteur (100) de station de base macrocellulaire.

16. Programme informatique comportant un code de programme destiné à exécuter l'un des procédés des revendications 14 ou 15, lorsque le programme informatique est exécuté sur un processeur, un ordinateur ou un matériel programmable.
